# EUROPÄISCHE PATENTANMELDUNG

(11) **EP 3 406 416 A1**
(43) Veröffentlichungstag der Anmeldung: **28.11.2018**
(21) Anmeldenummer: 18166679.3
(22) Anmeldetag: 10.04.2018
(51) Int. Cl.: B29C 47/02, B05C 7/08, B65F 1/14, B65D 65/46

(54) **VERFAHREN UND VORRICHTUNG ZUM EINBRINGEN EINES FLUIDES IN EINEN FOLIENSCHLAUCH**

(30) Priorität: 24.05.2017 DE 102017111403
(71) Anmelder: Cofresco Frischhalteprodukte GmbH & Co. KG, 32427 Minden (DE)
(72) Erfinder: LANGENHORST, Michael, 32425 Minden (DE); KROENER, Martin, 32425 Minden (DE); NEUNAST, Lutz, 32427 Minden (DE)
(74) Vertreter: Dantz, Jan Henning

(57) **Zusammenfassung**

Die vorliegende Erfindung betrifft ein Verfahren und eine Vorrichtung zum Einbringen eines Fluides in einen Folienschlauch (2), insbesondere zur Herstellung von Beuteln, wobei zunächst ein Folienschlauch (2) extrudiert wird. Der Folienschlauch (2) wird dann parallel zur Längsrichtung des Folienschlauches aufgeschnitten, und in die eingeschnittene Öffnung wird in den Folienschlauch ein Fluid eingesprüht, bevor die eingeschnittene Öffnung durch Verbinden der beiden Lagen des Folienmaterials entlang einer Längsnaht verschlossen wird. Dadurch kann mit exakter Dosierung eine innere Oberfläche des Folienschlauches beschichtet werden.

## Beschreibung

Die vorliegende Erfindung betrifft ein Verfahren und eine Vorrichtung zum Einbringen eines Fluides in einen Folienschlauch, insbesondere zur Herstellung von Beuteln.

Die EP 1 364 892 B1 offenbart einen Beutel, der aus einem Beutelkörper gebildet ist und entlang einer Öffnung ein elastisches Band aufweist, um den Beutel nach einer Befüllung zu verschließen. Solche Beutel haben sich als Müllbeutel gut bewährt. Problematisch ist die Beschichtung eines solchen Beutels oder eines Folienschlauches zur Herstellung eines Beutels mit oder ohne Zugband im inneren Bereich, beispielsweise hinsichtlich der Einbringung von geruchsabsorbierenden Stoffen oder Parfümlösungen um unangenehme Gerüche zu absorbieren oder durch Geruchsstoffe zu überdecken.

Solche Beschichtungsstoffe, wie sie beispielsweise in der EP 2 338 942 A2 beschrieben sind, können bei der Extrusion eines Folienschlauches in den Folienschlauch eingebracht werden. Die Stoffe können dabei in fester Form oder in flüssiger Form durch Einsprühen in eine Extrusionsblase zugegeben werden. Dabei ist allerdings nachteilig, dass das Einsprühen in die Extrusionsblase zu einer erhöhten Geruchsbelästigung an dem Extrusionswerkzeug führt, und zudem Verluste durch die bei der Extrusion vorliegenden Temperaturen entstehen, was eine erhöhte Dosierung notwendig macht. Zudem lassen sich viele Stoffe nicht mit der gewünschten Dosiergenauigkeit bei der Extrusion auftragen. EP 2 338 942 A2 bezieht sich auf Substrate mit antibakterieller Wirkung.

Es ist daher Aufgabe der vorliegenden Erfindung, bei einem Verfahren und einer Vorrichtung ein Fluid in einen Folienschlauch mit einer präzisen Dosierung einzubringen.

Diese Aufgabe wird mit einem Verfahren mit den Merkmalen des Anspruches 1 sowie einer Vorrichtung mit den Merkmalen des Anspruches 5 gelöst.

Bei dem erfindungsgemäßen Verfahren wird zunächst ein Folienschlauch extrudiert, der dann parallel zur Längsrichtung des Folienschlauches aufgeschnitten wird, um in die eingeschnittene Öffnung in den Folienschlauch ein Fluid einzusprühen. Meist wird zuerst ein Folienschlauch extrudiert und zu Mutterrollen aufgewickelt. Diese Mutterrollen werden im Anschluss wieder abgewickelt und auf Beutelkonfektionierungsmaschinen zu Beuteln verarbeitet. Hinsichtlich des erfindungsgemäßen Verfahrens kann somit auch ein Zwischenschritt des Aufwickelns auf eien Rolle und anschließendes Abwickeln erfolgen. Optional kann auch ohne einen solchen Zwischenschritt eine Konfektionierung erfolgen. Nach dem Einsprühen des Fluides wird dann die Öffnung durch Verbinden der beiden Lagen des Folienmaterials entlang einer Längsnaht verschlossen. Dieses Verfahren ermöglicht eine präzise Dosierung zur Beschichtung einer inneren Oberfläche eines Folienschlauches, bei dem geringe oder keine Verluste auftreten, und zudem kann die Beschichtung auch bei Temperaturen durchgeführt werden, die deutlich unter denen bei der Extrusion des Folienschlauches liegen. Dies ermöglicht eine Beschichtung mit unterschiedlichen Stoffen, insbesondere Absorberstoffen oder Duftstoffen. Als flüssigen Stoffen kann es sich beispielsweise um Lösungen mit antibakterieller Wirkung, aber auch um Lösungen mit geruchsabsorbierender Wirkung, Parfümen oder auch anderen Stoffen handeln.

Vorzugsweise wird der durch die Längsnaht geschlossene Folienschlauch anschließend zu einem Beutel konfektioniert, beispielsweise zu einem Müllbeutel. Der Beutel kann beispielswiese mit anderen Beuteln zusammenhängend zu einer Rolle aufgewickelt sein, so dass beim Öffnen des Beutels die innere Beschichtung durch den Kontakt mit Luft oder anderen Materialien wirksam wird.

Vorzugsweise erfolgt das Aufschneiden, Einsprühen eines Fluides und das Verschließen der Öffnung in einem kontinuierlichen Verfahren mit einem sich bewegenden Folienschlauch, der nach dem Extrudieren fortlaufend verarbeitet wird, bis die Längsnaht hergestellt ist und wieder ein Folienschlauch als Folienbahn gefördert wird. Auch das anschließende Konfektionieren von Beuteln aus dem wieder verschlossenen Folienschlauch kann in einem kontinuierlichen Verfahren erfolgen.

Bei dem Verfahren werden vorzugsweise die Lagen des Folienmaterials nach dem Aufschneiden zunächst auseinandergeführt, so dass eine keilförmige Öffnungskontur vorhanden ist, in die dann ein Fluid eingesprüht werden kann. Im Bereich der Einsprühung oder danach können die beiden Lagen des Folienmaterials, die auf unterschiedlichen Seiten der Düse angeordnet sind, dann wieder zusammengeführt werden, um sie miteinander zu verbinden. Das Verbinden kann durch Schweißen, Kleben oder Siegeln erfolgen, wobei auch hier das Verschließen der eingeschnittenen Öffnung vorzugsweise in einem kontinuierlichen Verfahren erfolgt.

Die erfindungsgemäße Vorrichtung umfasst zunächst eine Einrichtung zur Herstellung eines Folienschlauches, insbesondere eine Extrusionsvorrichtung, von der ein Folienschlauch zu einer Einrichtung zum Aufschneiden des Folienschlauches in eine Längsrichtung gefördert wird. Optional kann auch eine Wickelvorrrichtung zum Aufwickeln und nachfolgenden Abwickeln des Folienschlauches vorgesehen sein. Nach dem Aufschneiden des Folienschlauches, beispielsweise über ein Messer, wird über eine Einrichtung ein Fluid in die eingeschnittene Öffnung eingesprüht, so dass der Folienschlauch an einer Innenseite zumindest bereichsweise beschichtet wird. Ferner umfasst die Vorrichtung eine Einrichtung zum Verschließen der eingeschnittenen Öffnung durch Vorsehen einer Längsnaht an dem Folienschlauch. Dadurch kann auf effektive Weise im Durchlaufverfahren eine Beschichtung an einer Innenseite des Folienschlauches vorgesehen werden.

Zum Verschließen der eingeschnittenen Öffnung ist vorzugsweise eine Schweißeinrichtung vorgesehen. Die Schweißeinrichtung kann eine oder mehrere, vorzugsweise feststehende, beheizbare Backen umfassen, zwischen denen die beiden Lagen aus Folienmaterial durchgeführt werden, so dass im Bereich der Backen das Folienmaterial miteinander verschweißt oder versiegelt wird. Auch ein Verkleben des Folienmaterials ist alternativ möglich.

In einer weiteren Ausgestaltung der Vorrichtung ist eine Pumpe oder es sind mehrere Pumpen vorgesehen, mittels der über eine Düse eine Flüssigkeit in den aufgeschnittenen Folienschlauch einsprühbar ist. Über die Pumpe und die Düse kann vergleichsweise genau dosiert werden, welche Menge an Fluid und an welchen Stellen des Folienschlauches eine Beschichtung aufgebracht wird.

Die Vorrichtung umfasst ferner vorzugsweise eine erste Führungseinrichtung, mittels der die Lagen aus Folienmaterial auseinander geführt werden, und eine zweite Führungseinrichtung, mittels der die beiden Lagen wieder zusammengeführt werden. Dadurch kann eine definierte Bewegungsbahn der beiden Lagen aus Folie erzeugt werden, die ein präzises Anbringen der Längsnaht ermöglicht.

Die Erfindung wird nachfolgend anhand eines Ausführungsbeispiels mit Bezug auf die beigefügte Zeichnung näher erläutert. Es zeigt:

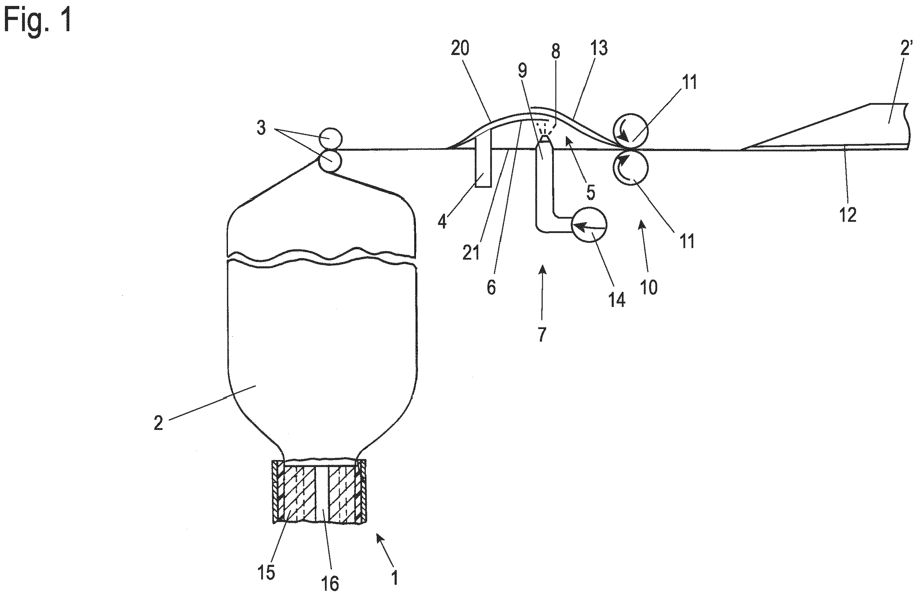

- Figur 1: eine schematische Ansicht einer erfindungsgemäßen Vorrichtung zum Einbringen eins Fluides in einen Folienschlauch.

Eine Einrichtung 1 zur Herstellung eines Folienschlauches umfasst eine Extrusionsdüse 15, die über einen ringförmigen Spalt einen Folienschlauch 2 herstellt. Der Folienschlauch 2 wird durch Einblasen eines Gases durch einen Kanal 16 gekühlt, wobei die eingeblasene Luft durch weitere Kanäle an der Extrusionsdüse 15 wieder abgesaugt werden kann. Der Folienschlauch 2 wird nach dem Abkühlen durch Umlenkrollen 3 geführt, so dass der Folienschlauch 2 in einer Bahnform vorliegt. Optional kann der Folienschlauch 2 im Bereich der Umlenkrollen 3 zu einer "Mutterrolle" aufgewickelt und an einem anderen Ort wieder abgewickelt werden.

Der bahnförmige Folienschlauch 2 wird anschließend durch eine Einrichtung 4 aufgeschnitten, insbesondere ein Messer, das mit seiner Spitze in den Folienschlauch 2 eingreift. Durch die Einrichtung 4 wird somit eine Öffnung 5 eingeschnitten, und der Folienschlauch 2 besitzt im Bereich der Öffnung 5 eine erste Lage 20 und eine zweite Lage 21 aus Folienmaterial. Über eine erste Führungseinrichtung 6 werden die erste Lage 20 und die zweite Lage 21 auseinandergeführt, so dass die Öffnung 5 hinter der Einrichtung 4 eine Höhe senkrecht zur Längsrichtung von beispielsweise 1 cm bis 10 cm besitzt. In diesem Bereich der Öffnung 5 ist eine Einrichtung 7 zum Einsprühen eines Fluides 8 vorgesehen, die eine Düse 9 umfasst. Eine schematisch dargestellte Pumpe 14 fördert ein Fluid, insbesondere eine Flüssigkeit, zu der Düse 9, wo das Fluid 8 mit einer definierten Geschwindigkeit und in einer definierten Menge an einer Innenseite des Folienschlauches 2 durch die Öffnung 5 aufgetragen wird.

Als Beschichtungsstoffe kommen für das Fluid Absorptionsstoffe in Betracht, die Gerüche absorbieren, Duftstoffe, ätherische Öle oder andere Inhaltsstoffe, die an der Innenseite des Folienschlauches 2 vorgesehen werden sollen.

Die erste Lage 20 und die zweite Lage 21 des Folienmaterials werden dann über eine zweite Führungseinrichtung 13 wieder zusammengeführt, so dass die erste Lage 20 und die zweite Lage 21 wieder aufeinander aufliegen. Die beiden Lagen 20 und 21 werden dann durch eine Einrichtung 10 zum Verschließen der Öffnung 5 geführt, die schematisch durch zwei Rollen 11 dargestellt ist. Zumindest eine der Rollen 11 ist beheizbar ausgebildet, um über einen Wärmeeintrag und einen vorbestimmten Anpressdruck die erste Lage 20 mit der zweiten Lage 21 zu verschweißen. Dadurch wird eine Längsnaht hergestellt, die parallel zu der Schnittkante an der Lage 20 und 21 verläuft.

Hinter den beiden Rollen 11 wurde die wieder verschlossene Folienbahn 2' um 90° gedreht dargestellt, und es ist erkennbar, dass benachbart zu den Schnittkanten eine Längsnaht 12 in den Folienschlauch 2' eingebracht wurde. Der Folienschlauch 2' kann nun weiter konfektioniert werden, insbesondere können aus dem Folienschlauch 2' Beutel hergestellt werden, beispielsweise Müllbeutel, die an einer Innenseite zumindest bereichsweise beschichtet sind.

Die erste und zweite Führungseinrichtung 6 und 13 können beispielsweise aus gebogenen Führungsstreifen hergestellt sein, entlang denen die Lagen 20 und 21 aus Folienmaterial entlang gleiten. Die Geometrie der Öffnung 5 kann in weiten Bereichen frei gewählt werden, je nachdem, welche Menge an Fluid durch die Düse 9 eingesprüht werden soll. Es ist natürlich auch möglich, im Bereich der Öffnung 5 mehrere Düsen 9 nebeneinander vorzusehen, um mehrere Inhaltsstoffe in den Folienschlauch 2 einzusprühen. Zudem können auch mehrere Öffnungen 5 an dem Folienschlauch 2 eingeschnitten werden, um beispielswiese an gegenüberliegenden Seiten ein Fluid in den Folienschlauch 2 einzusprühen.

### Bezugszeichenliste

- 1: Einrichtung
- 2, 2': Folienschlauch
- 3: Umlenkrollen
- 4: Einrichtung
- 5: Öffnung
- 6: Führungseinrichtung
- 7: Einrichtung
- 8: Fluid
- 9: Düse
- 10: Einrichtung
- 11: Rolle
- 12: Längsnaht
- 13: Führungseinrichtung
- 14: Pumpe
- 15: Extrusionsdüse
- 16: Kanal
- 20: Lage
- 21: Lage

## Patentansprüche

1. Verfahren zum Einbringen eines Fluides in einen Folienschlauch (2), insbesondere zur Herstellung von Beuteln, mit den folgenden Schritten:
- Extrudieren eines Folienschlauches (2);
- Aufschneiden des Folienschlauches (2) parallel zur Längsrichtung des Folienschlauches;
- Einsprühen eines Fluides durch die eingeschnittene Öffnung (5) in den Folienschlauch, und
- Verschließen der Öffnung (5) durch Verbinden der beiden Lagen des Folienmaterials entlang einer Längsnaht (12).

2. Verfahren nach Anspruch 1, **dadurch gekennzeichnet, dass** der durch die Längsnaht (12) geschlossene Folienschlauch (2) zu einem Beutel, insbesondere einem Müllbeutel, konfektioniert wird.

3. Verfahren nach Anspruch 1 oder 2, **dadurch gekennzeichnet, dass** das Aufschneiden, Einsprühen und Verschließen der Öffnung (5) in einem kontinuierlichen Verfahren erfolgt.

4. Verfahren nach einem der vorhergehenden Ansprüche, **dadurch gekennzeichnet, dass** die beiden Lagen des Folienmaterials nach dem Aufschneiden auseinandergeführt und wieder zusammengeführt werden.

5. Vorrichtung zum Einbringen eines Fluides in einen Folienschlauch (2), insbesondere zur Herstellung eines zumindest bereichsweise an einer Innenseite beschichteten Folienbeutels, umfassend:
a) eine Einrichtung (1) zur Herstellung eines Folienschlauches (2);
b) eine Einrichtung (4) zum Aufschneiden des Folienschlauches (2) in einer Längsrichtung;
c) eine Einrichtung (7) zum Einsprühen eines Fluides (8) in die eingeschnittene Öffnung (5), und
d) eine Einrichtung (10) zum Verschließen der eingeschnittenen Öffnung (5) durch Vorsehen einer Längsnaht (12) an dem Folienschlauch (2).

6. Vorrichtung nach Anspruch 5, **dadurch gekennzeichnet, dass** die Einrichtung (10) zum Verschließen der eingeschnittenen Öffnung (5) eine Schweißeinrichtung (11) umfasst.

7. Vorrichtung nach Anspruch 6, **dadurch gekennzeichnet, dass** die Schweißeinrichtung (11) eine beheizbare Rolle umfasst, mittels der eine Schweißnaht zwischen zwei Lagen aus Folienmaterial herstellbar ist.

8. Vorrichtung nach einem der Ansprüche 5 bis 7, **dadurch gekennzeichnet, dass** eine Pumpe vorgesehen ist, mittels der über eine Düse Flüssigkeit in den eingeschnittenen Folienschlauch (2) einsprühbar ist.

9. Vorrichtung nach einem der Ansprüche 5 bis 8, **dadurch gekennzeichnet, dass** eine erste Führungseinrichtung (6) vorgesehen ist, um die Lagen des Folienmaterials nach dem Schneiden auseinanderzuführen.

10. Vorrichtung nach einem der Ansprüche 5 bis 9, **dadurch gekennzeichnet, dass** eine zweite Führungseinrichtung (13) vorgesehen ist, um die beiden Lagen aus Folienmaterial vor der Einrichtung (10) zum Verschließen der eingeschnittenen Öffnung (5) zusammenzuführen.
